# EUROPEAN PATENT APPLICATION

(11) **EP 4 312 394 A1**
(43) Date of publication of application: **31.01.2024**
(21) Application number: 23188129.3
(22) Date of filing: 27.07.2023
(51) Int. Cl.: H04L 5/00, H04W 92/18, H04W 56/00

(54) **SYNCHRONIZATION SIGNAL PATTERN FOR SIDELINK IN UNLICENSED BANDS (SL-U)**

(30) Priority: 29.07.2022 WO PCT/CN2022/109041; 21.07.2023 CN 202310904521
(71) Applicant: MediaTek Singapore Pte. Ltd., Singapore 138628 (SG)
(72) Inventor: CHENG, Junqiang, Beijing (CN); CHEN, Tao, Beijing (CN); CHEN, Jing-Wei, Hsinchu City (TW)
(74) Representative: Patentship Patentanwaltsgesellschaft mbH

(57) **Abstract**

Apparatus and methods are provided for sidelink synchronization signal pattern in the unlicensed frequency bands (SL-U). In one novel aspect, the UE (111), configured one or more SL resource pools, determines an applicability of the occupied channel bandwidth (OCB), and configures OCB-compliance SL synchronization signal block (S-SSB) based on the OCB requirement, wherein the OCB-compliance S-SSB is included in or excluded from the one or more SL resource pools to the meet the OCB requirements. In one embodiment, the S-SSB is excluded from the SL resource pool and the S-SSB is transmitted repeatedly in the frequency domain multiple times or transmitted interlaced in frequency domain based on the OCB requirement. In one embodiment, the SL synchronization signal blocks are included in the SL resource pool and are multiplexed with other transmissions in the frequency domain multiplexed (FDM) mode or time domain multiplexed (TDM) mode.

## Description

### TECHNICAL FIELD

The disclosed embodiments relate generally to wireless communication, and, more particularly, to synchronization signal pattern for sidelink in unlicensed bands.

### BACKGROUND

Sidelink (SL) communication was introduced to enable direct transmission between two user equipments (UEs), which is also known as the device-to-device (D2D) communications. With the development of 3GPP normative works, the scenarios of sidelink are extended to UE-to-network relay, public safety, vehicle-to-everything (V2X) communications and so on. The critical role of sidelink in long term evolution (LTE) and the new radio (NR) has made it an inevitable remedy to support diverse use cases of future wireless communications.

To meet the increased demands of wireless data traffic, using unlicensed frequency bands has drawn a lot of attention in the wireless industry to improve the capacity of future wireless communication systems. SL transmission on unlicensed/shared spectrum (SL-U) is one of the most promising technologies for future SL evolution. The utilization of unlicensed spectrum for sidelink communications is regarded as the most promising direction for further development of sidelink communication. However, some radio access technologies (RATs), such as NR-U communications, Wi-Fi, etc., have already operated in the unlicensed frequency bands. One of the most critical issues of allowing sidelink communications to operate in the unlicensed frequency bands is to ensure the fair and harmonious coexistence with other RATs.

Improvements and enhancements are required for sidelink resource allocation in unlicensed frequency bands to ensure harmonious coexistence with other RATs.

### SUMMARY

Apparatus and methods are provided for sidelink synchronization signal pattern in the unlicensed frequency bands (SL-U). In one novel aspect, the UE, configured one or more SL resource pools, determines an applicability of the occupied channel bandwidth (OCB), and configures OCB-compliance SL synchronization signal block (S-SSB) based on the OCB requirement, wherein the OCB-compliance S-SSB is included in or excluded from the one or more SL resource pools to the meet the OCB requirements. In one embodiment, the S-SSB is excluded from the SL resource pool and the S-SSB is transmitted repeatedly in the frequency domain multiple times based on the OCB requirement. In another embodiment, the S-SSB is excluded from the SL resource pool and the SL synchronization signal blocks are transmitted interlaced in the frequency domain to meet the OCB requirement. In one embodiment, the frequency gaps between each repeatedly transmitted SL synchronization signal blocks are configured. In one embodiment, the SL synchronization signal blocks are included in the SL resource pool and are multiplexed with other transmissions in the frequency domain multiplexed (FDM) mode or time domain multiplexed (TDM) mode. The SL synchronization signal blocks are multiplexed with other SL-U transmissions including data, control, and feedback transmission. In one embodiment, the SL synchronization signal blocks are multiplexed with other SL-U transmissions within a same time slot in the mode of FDM. In another embodiment, the FDM'ed the SL synchronization signal blocks are configured with a shorter length in time domain. In yet another embodiment, the SL synchronization signal blocks avoids one or more preconfigured resources allocated for one or more predefined usages. In one embodiment, the predefined usages include 1st stage SCI, 2nd stage SCI, DMRS and PSFCH transmission. In one embodiment, a new field is preconfigured in a physical sidelink control channel (PSCCH) to indicate whether the SL synchronization signal blocks are multiplexed in the slot. In another embodiment, a transmission power of the SL synchronization signal blocks is preconfigured as a constant value.

More specifically, a first aspect of the invention relates to a method for a user equipment (UE) in a wireless network, comprising: configuring one or more sidelink (SL) resource pools for SL transceiving in unlicensed frequency bands (SL-U) in the wireless network; determining an occupied channel bandwidth (OCB) requirement for the SL-U transceiving; configuring OCB-compliance SL synchronization signal blocks (S-SSB) based on the OCB requirement, wherein the OCB-compliance S-SSB is included in or excluded from the one or more resource pools to meet the determined OCB requirement; and transmitting the OCB-compliance S-SSB for the SL-U transceiving.

In a first embodiment of the first aspect, the SL synchronization signal blocks are excluded from all of the one or more SL resource pools.

In a second embodiment of the first aspect in combination with the first embodiment of the first aspect, the SL synchronization signal blocks are transmitted repeatedly in a frequency domain multiple N times based on the OCB requirements, and wherein a value of N is preconfigured or configured.

In a third embodiment of the first aspect in combination with the second embodiment of the first aspect, frequency gaps are preconfigured or configured between each repeatedly transmitted SL synchronization signal blocks.

In a fourth embodiment of the first aspect in combination with the third embodiment of the first aspect, the frequency gaps and a number of frequency domain repeated transmissions are configured within preconfigured corresponding range, and wherein a range for the frequency gaps and a range for the number of frequency domain repeated transmission are based on the OCB requirement, a power spectral density (PSD) requirement, subcarrier spacing (SCS), and S-SSB transmission power requirement.

In a fifth embodiment of the first aspect in combination with the first embodiment of the first aspect, SL synchronization signal blocks are transmitted interlaced in a frequency domain.

In a sixth embodiment of the first aspect, the SL synchronization signal blocks are included in the one or more SL resource pools.

In a seventh embodiment of the first aspect in combination with the sixth embodiment of the first aspect, the SL synchronization signal blocks are multiplexed with other SL-U transmissions within a same time slot in the mode of frequency domain multiplexing (FDM).

In an eighth embodiment of the first aspect in combination with the seventh embodiment of the first aspect, the SL synchronization signal blocks are configured with a length shorter than one slot in time domain.

In a ninth embodiment of the first aspect in combination with the seventh embodiment of the first aspect, the location of SL synchronization signal blocks avoids one or more preconfigured resources allocated for one or more predefined usages.

In a tenth embodiment of the first aspect in combination with the sixth embodiment of the first aspect, the SL synchronization signal blocks are multiplexed with other SL-U transmissions across different slots in the mode of time domain multiplexing (TDM).

In an eleventh embodiment of the first aspect in combination with the sixth embodiment of the first aspect, a new field is preconfigured in a physical sidelink control channel (PSCCH) to indicate whether the SL synchronization signal blocks are multiplexed in the slot.

In a twelfth embodiment of the first aspect, the transmission power of the SL synchronization signal block on one resource block (RB) set within an occupied bandwidth part (BWP) is preconfigured as a constant value.

In a thirteenth embodiment of the first aspect, the transmission power of the SL synchronization signal block on each RB set within an occupied bandwidth part (BWP) is preconfigured as a constant value.

A second aspect of the invention relates to a user equipment (UE), comprising: a transceiver that transmits and receives radio frequency (RF) signal in a wireless network; a resource pool module that configures one or more sidelink (SL) resource pools for the UE for SL transceiving in unlicensed frequency bands (SL-U) in the wireless network; an occupied channel bandwidth (OCB) module that determines an occupied channel bandwidth (OCB) requirement for the SL-U transceiving; a configuration module that configures OCB-compliance SL synchronization signal blocks (S-SSB) based on the OCB requirement, wherein the OCB-compliance S-SSB is included in or excluded from the one or more resource pools to meet the determined OCB requirement; and an OCB control module that transmits the OCB-compliance S-SSB for the SL-U transceiving.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates a schematic system diagram illustrating an exemplary wireless network for sidelink data communication in unlicensed frequency bands with other coexistence RATs in accordance with embodiments of the current invention.
Figure 2 illustrates an exemplary top-level diagram for the sidelink synchronization signal pattern design to meet the OCB requirements in accordance with embodiments of the current invention.
Figure 3 illustrates exemplary diagrams for different designs of the OCB-compliance S-SSB in accordance with embodiment of the current invention.
Figure 4A illustrates an exemplary diagram for the OCB-compliance S-SSB excluded from the SL resource pool with frequency domain repeated S-SSB in accordance with embodiments of the current invention.
Figure 4B illustrates an exemplary diagram for the OCB-compliance S-SSB excluded from the SL resource pool with interlaced S-SSB in accordance with embodiments of the current invention.
Figure 5A illustrates an exemplary diagram for OCB-compliance S-SSB to be included in the SL resource pool and multiplexed in the slot without PSFCH transmission in accordance with embodiments of the current invention.
Figure 5B illustrates an exemplary diagram for OCB-compliance S-SSB to be included in the SL resource pool and multiplexed in the slot with PSFCH transmission in accordance with embodiments of the current invention.
Figure 5C illustrates an exemplary diagram for OCB-compliance S-SSB to be included in the SL resource pool and multiplexed in the slot with contiguous RB-based transmission for PSCCH and PSSCH in accordance with embodiments of the current invention.
Figure 6 illustrates an exemplary flow chart for the sidelink synchronization signal pattern design to meet the OCB requirements in accordance with embodiments of the current invention.

### DETAILED DESCRIPTION

Reference will now be made in detail to some embodiments of the invention, examples of which are illustrated in the accompanying drawings.

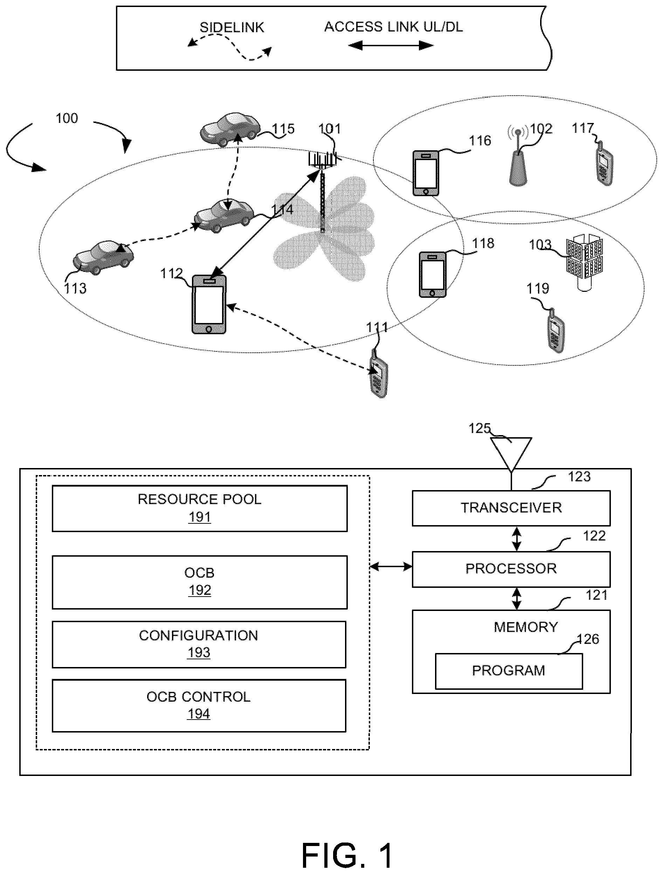

Figure 1 is a schematic system diagram illustrating an exemplary wireless network for sidelink data communication in unlicensed frequency bands with other coexistence RATs in accordance with embodiments of the current invention. Wireless network 100 includes multiple communication devices or mobile stations, such as user equipments (UEs) 111, 112, 113, 114, and 115, which are configured with sidelink in unlicensed frequency bands. The exemplary mobile devices in wireless network 100 have sidelink capabilities. Sidelink communications refer to the direct communications between terminal nodes or UEs without the data going through the network. For example, UE 113 communicates with UE 114 directly without going through links with the network units. The scope of sidelink transmission also supports UE-to-network relay to extend the service range of an eNB, where the inter-coverage UE acts as the relay node between an eNB and an out-of-coverage UE. For example, UE 112 is connected with base station 101 through an access link. UE 112 provides network access for out-of-coverage UE 111 through sidelink relay. The base station, such as base station 101, may also be referred to as an access point, an access terminal, a base station, a Node-B, an eNode-B (eNB), a gNB, or by other terminology used in the art. The network can be a homogeneous network or heterogeneous network, which can be deployed with the same frequency or different frequencies. Base station 101 is an exemplary base station. With the demands for more capacity and the development of sidelink communication, it is important for the sidelink devices to use the unlicensed frequency bands and be harmoniously coexistence with devices with other RATs operating in the same unlicensed frequency bands. For example, neighboring UEs 116 and 117 communicate with base station 102 through other RATs, such as Wi-Fi, sharing the same unlicensed frequency band. Neighboring UEs 118 and 119 communicate with base station 103 through other RATs, such as NR, sharing the same unlicensed frequency band.

For sidelink transmissions on the unlicensed spectrum (SL-U), the SL-U transmission should comply with the occupied channel bandwidth (OCB) requirements as (pre-)configuration and/or regulatory requirements. The OCB requires the transmission on the unlicensed bands to occupy a minimum percentage of a configured nominal channel bandwidth (NCB). In one example, the OCB requires the transmission occupies 80% to 100% of the NCB. S-SSB provides synchronization for SL-U transceiving. The current S-SSB occupies eleven resource blocks (RBs), which cannot meet the OCB requirement. In one novel aspect, the UE configures the S-SSB to be OCB-compliance S-SSB such that the S-SSB meets the OCB requirements. In one embodiment, the S-SSB is transmitted in the way of repetition in frequency domain, and/or interlaced RB(s) to meet the OCB requirement. In another embodiment, the OCB-compliance S-SSB is designed with a new structure/sequence with wider bandwidth. In yet another embodiment, the S-SSB is multiplexed with other transmissions (e.g., data/control/feedback) to meet the OCB requirement. In one embodiment, the configured OCB-compliance S-SSB is excluded from the SL resource pools of the UE. In another embodiment, the configured OCB-compliance S-SSB is included in one or more SL resource pools of the UE. The S-SSB transmissions are in FDM or TDM modes.

For the case that the synchronization signals are multiplexed with other SL signals in the FMD mode, at least the following principles should be taken into consideration when design the new pattern of synchronization signals for SL-U. Firstly, in order to realize the FDM'ed transmission with other transmissions in the same slot, the length of synchronization signal in time domain (i.e., occupied symbol length) should be shorter enough than the original synchronization signal length in legacy SL. Secondly, the synchronization signals should avoid occupying the resources for physical sidelink control channel (PSCCH) and/or demodulation reference signal (DMRS) and/or physical sidelink feedback channel (PSFCH) and/or automatic gain control (AGC) and/or guard symbol(s) in legacy SL slot pattern as (pre-)configuration so that the legacy SL slot pattern can be reused with limited modification. Finally, a new field can be added to PSCCH to indicate whether the synchronization signals are multiplexed in the corresponding slot.

Figure 1 further illustrates simplified block diagrams of a mobile device/UE for operating in the unlicensed frequency band. UE 111 is described as an example. UE 111 has an antenna 125, which transmits and receives radio signals. An RF transceiver circuit 123, coupled with the antenna, receives RF signals from antenna 125, converts them to baseband signals, and sends them to processor 122. In one embodiment, the RF transceiver may comprise two RF modules (not shown). RF transceiver 123 also converts received baseband signals from processor 122, converts them to RF signals, and sends out to antenna 125. Processor 122 processes the received baseband signals and invokes different functional modules to perform features in UE 111. Memory 121 stores program instructions and data 126 to control the operations of UE 111. Antenna 125 sends uplink transmission and receives downlink transmissions to/from base stations.

UE 111 also includes a set of control modules that carry out functional tasks. These control modules can be implemented by circuits, software, firmware, or a combination of them. A resource pool module 191 configures one or more sidelink (SL) resource pools for the UE for SL transceiving in unlicensed frequency bands (SL-U) in the wireless network. An occupied channel bandwidth (OCB) module 192 determines an occupied channel bandwidth (OCB) requirement for the SL-U transceiving. A configuration module 193 configures OCB-compliance SL synchronization signal blocks (S-SSB) based on the OCB requirement, wherein the OCB-compliance S-SSB is included in or excluded from the one or more resource pools to meet the determined OCB requirement. An OCB control module 194 transmits the OCB-compliance S-SSB for the SL-U transceiving.

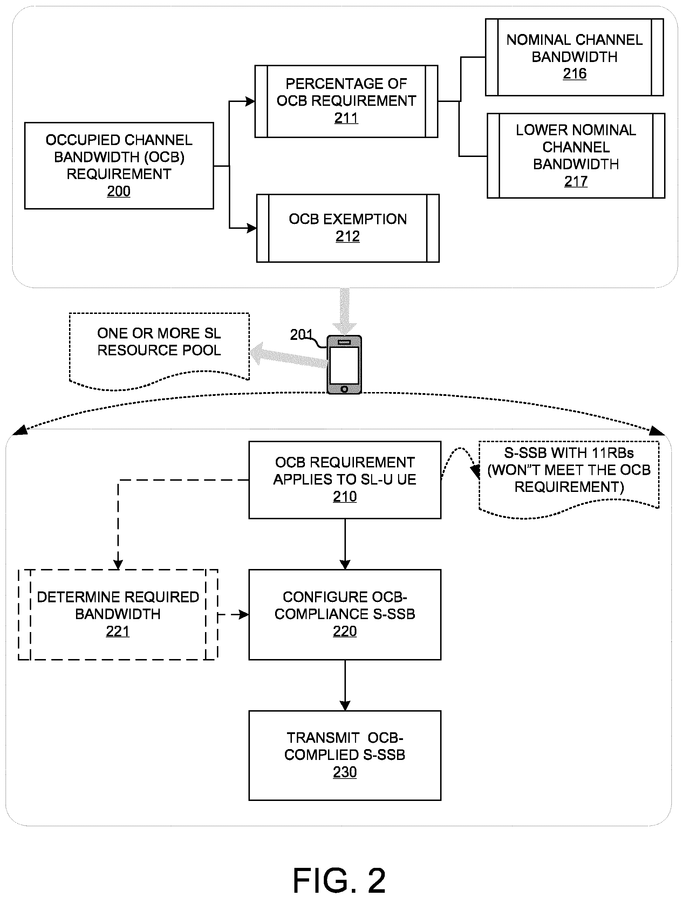

Figure 2 illustrates an exemplary top-level diagram for the sidelink synchronization signal pattern design to meet the OCB requirements in accordance with embodiments of the current invention. UE 201 is configured with one or more SL resource pools. The SL resource pools are configured for SL transceiving in unlicensed frequency bands. OCB limit 200 is required in some regions for transmitting on unlicensed frequency bands. The OCB requirement (211) requires a percentage of nominal channel bandwidth (NCB) to be occupied. For example, ETSI regulation requires the OCB shall be between 80% to 100% of NCB for 5GHz. The NCB (216) is configured for a single operating channel. For example, NCB (216) is configured to be 20MHz. Alternatively, a lower NCB (217) may be implemented. For example, NCB (217) is configured to be 5MHz. OCB exemption (212) applies as a relaxed requirement of occupied bandwidth frequency domain. For example, when one or more conditions are met, the OCB is allowed to be lower than the percentage set for the OCB requirement with additional limitations. For example, curing a channel occupancy time, the devices is allowed to operate temporarily with a relaxed / lower percentage of NCB, with a minimum bandwidth requirement, such as minimum of 2MHz.

In one novel aspect, UE 201 operating in SL-U determines the OCB requirements (210). The S-SSB with 11 RBs does not meet the OCB requirement. At step 220, UE 201 configures the OCB-compliance S-SSB. In one embodiment (221), the UE determines the minimum bandwidth requirement based on the UE configuration. At step 230, UE 201 transmits the OCB-compliance S-SSB.

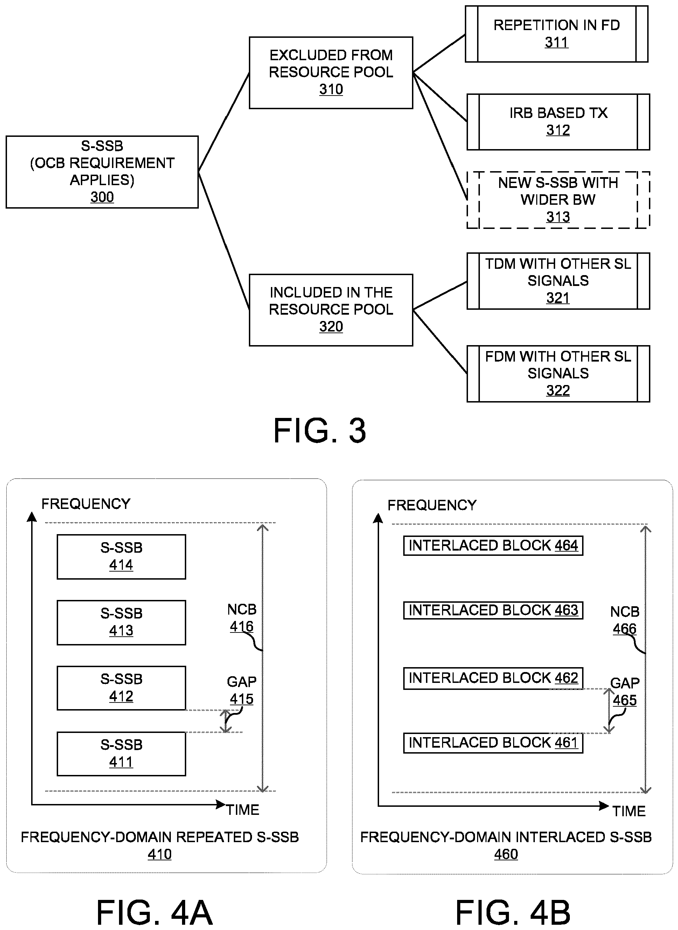

Figure 3 illustrates exemplary diagrams for different designs of the OCB-compliance S-SSB in accordance with embodiment of the current invention. To meet the OCB requirement, the UE configures the OCB-compliance S-SSB (300). In one embodiment (310), the S-SSB is excluded from the UE SL resource pool. Since the S-SSB has 11 RBs, when excluded from the resource, the transmission of the S-SSB needs to be redesigned to meet the OCB requirement. In one embodiment 311, the S-SSB is configured to be repeated in the frequency domain. In another embodiment 312, the S-SSB is configured to be interlaced resource block (IRB) based transmission to meet the OCB requirements. In another embodiment (313), a new S-SSB with enlarged bandwidth is configured. For example, S-PSS and/or S-SSS and/or PSBCH are configured with wider bandwidth. In another embodiment 320, the S-SSB is included in the SL resource pool. In one embodiment 321, the synchronization signals, the S-SSB, are multiplexed with other SL-U transmissions in the mode of TDM. In one embodiment of the TDM multiplexing, the S-SSB is configured to occupy four symbols as legacy NR-U SSB pattern, and/or one slot (e.g., thirteen symbols) as legacy SL S-SSB pattern. In the frequency domain, if OCB requirement is mandatory, similar to 310, the S-SSB is configured with the repetition transmission (311) in frequency domain and/or interlace transmission (312) and/or a new sequence of S-SSB (313). In another embodiment 322, with the S-SSB being included in the resource pool, the S-SSB are multiplexed with other SL transmission in the FDM mode.

Figure 4A illustrates an exemplary diagram for the OCB-compliance S-SSB excluded from the SL resource pool with frequency domain repeated S-SSB in accordance with embodiments of the current invention. In one embodiment, the S-SSB is excluded from the one or more configured SL resource pools of the UE. The UE determines that OCB is required. In one embodiment 410, if OCB is required, the legacy S-SSB in SL can be repeated in frequency domain. As an example, the UE is configured with NCB 416. The UE determines a required bandwidth under OCB. The S-SSB is transmitted with frequency domain repetition. S-SSB 411, 412, 413, and 414 are configured to be transmitted to meet the OCB requirement. In one embodiment, frequency gap 415 is configured between each frequency domain repeated S-SSBs. When frequency gap 415 is configured, it refers to a process of configuring before the start of communication and/or a process of configuring during the communication. In one embodiment, frequency gap 415 is determined based on one or more elements including NCB 416, the OCB requirement, and the S-SSB bandwidth. In one embodiment, the S-SSBs are repeated in the frequency domain N times and N is configured or preconfigured.

Figure 4B illustrates an exemplary diagram for the OCB-compliance S-SSB excluded from the SL resource pool with interlaced S-SSB in accordance with embodiments of the current invention. In one embodiment, the S-SSB is excluded from the one or more configured SL resource pools of the UE. In one embodiment 460, the S-SSB are transmitted in an interlaced way, with interlaced block 461, 462, 463, and 464. In one embodiment, gap 465 is determined based on the NCB 466, the OCB requirement and the bandwidth of the S-SSB and interlaced blocks.

In one embodiment, the synchronization signals, i.e., the S-SSB, can be further (pre-)configured to be multiplexed with other SL-U transmissions (e.g., PSCCH/PSSCH/PSFCH transmissions) to fulfill the OCB requirement if required. In one embodiment, the S-SSB is FDM'ed with other SL-U transmissions. In another embodiment, the S-SSB is TDM'ed with other SL-U transmissions. In principle, compared to the S-SSB pattern in legacy SL occupying one slot (e.g., thirteen symbols), the new pattern of S-SSB in SL-U should have a shorter length in time domain to realize FDM'ed with other SL-U transmissions. Specifically, the new S-SSB pattern can be (pre-)configured to occupy *M* symbol(s) in time domain and *N* RB(s) in frequency domain. Then an example is that the value of *M* can be set as four and the value of *N* can be set as twenty. In this example, the SSB pattern in legacy NR/NR-U is reused.

In one embodiment, when S-SSB is multiplexed with other SL-U signals in FDM mode, the S-SSB should avoid occupying some resources as configuration. In one embodiment, the S-SSB is multiplexed with other SL-U transmission to avoid one or more resources including the resources for PSCCH, the DMRS for PSSCH, the PSFCH, the AGC, the guard symbol, and the 2^{nd}-SCI in legacy SL slot pattern so that the legacy SL slot pattern can be reused with limited modification. In another embodiment, the S-SSB is configured to occupy a set of consecutive symbols in a slot. For example, for the case that S-SSB is designed with N symbols in time domain, it means that the S-SSB will occupy a block comprised of N consecutive symbols in time domain with the limitation that the block will not overlap with the resources for PSCCH and/or DMRS (for PSSCH) and/or PSFCH and/or AGC and/or guard symbol and/or 2^{nd}-SCI in legacy SL slot. It should be noted that the above principle does not need to support all DMRS patterns, and it can be according to the (pre-)configuration that only a subset of DMRS patterns in legacy SL should be supported when design the SL-U slot pattern with S-SSB transmission.

In one embodiment, a new field can be (pre-)configured in the PSCCH to indicate whether the S-SSB transmission is multiplexed in the corresponding slot(s). For example, one additional new bit can be (pre-)configured in PSCCH. Then, if the new bit is set as "0", it indicates that the S-SSB transmission is not multiplexed in the corresponding slot and thus the corresponding resources can be occupied by some other transmissions (e.g., PSSCH). If the new bit is set as "1", it indicates that the S-SSB transmission is multiplexed in the corresponding slot, and thus the receiver can receive the S-SSB transmission in the corresponding resource to obtain synchronization information.

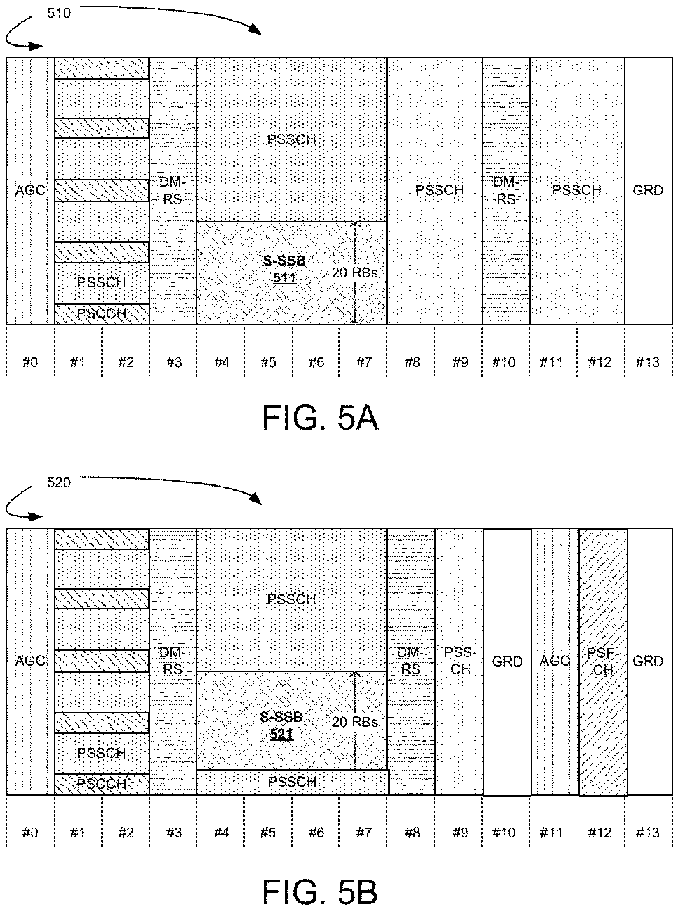

Figure 5A illustrates an exemplary diagram for OCB-compliance S-SSB to be included in the SL resource pool and multiplexed in the slot without PSFCH transmission in accordance with embodiments of the current invention. The UE determines that the OCB requirement applies. In one embodiment, the S-SSB is FDM'ed with other SL-U transmission. The SL-U transmission block 510 is configured without the PSFCH. In one embodiment, the SSB pattern 511 in legacy NR-U is reused, which means the S-SSB occupies a block comprised of four symbols in time domain and twenty RBs in frequency domain. Besides, the S-SSB should avoid occupying some resources occupied by some other signals. In this example, it means that the S-SSB should avoid occupying the symbol #0 to symbol #3 (used for AGC, PSCCH and DMRS), symbol #10 (used for DMRS) and symbol #13 (used for guard symbol). Considering the above assumptions, one S-SSB pattern for SL-U can designed to occupy symbol #4 to symbol #7 in time domain and 20 RBs in frequency domain that start from a (pre-)configured RB (e.g., the first RB in this example) of the occupied transmission bandwidth. Moreover, another S-SSB pattern for SL-U in time domain can be designed to occupy symbol #5 to symbol #8 and/or symbol #6 to symbol #9.

Figure 5B illustrates an exemplary diagram for OCB-compliance S-SSB to be included in the SL resource pool and multiplexed in the slot with PSFCH transmission in accordance with embodiments of the current invention. The UE determines that the OCB requirement applies. In one embodiment, the S-SSB is FDM'ed with other SL-U transmission. The SL-U transmission block 520 is configured with the PSFCH in symbol #12. SL-U transmission block 520 has symbol #0 to symbol #3, symbol # 8, and symbol #10 to symbol #13 configured for PSCCH and/or DMRS and/or PSFCH and/or AGC and/or guard symbol. Therefore, the S-SSB can only occupy the symbols chosen from the left resources, i.e., symbol #4 to symbol #7 and symbol #9. Considering that S-SSB needs to occupy a set of consecutive symbols, symbol #4 to symbol #7 are chosen for S-SSB transmission in this example. Besides, in this example, the frequency resource of the S-SSB 521 is (pre-)configured to start from the second lowest RB of the occupied transmission bandwidth.

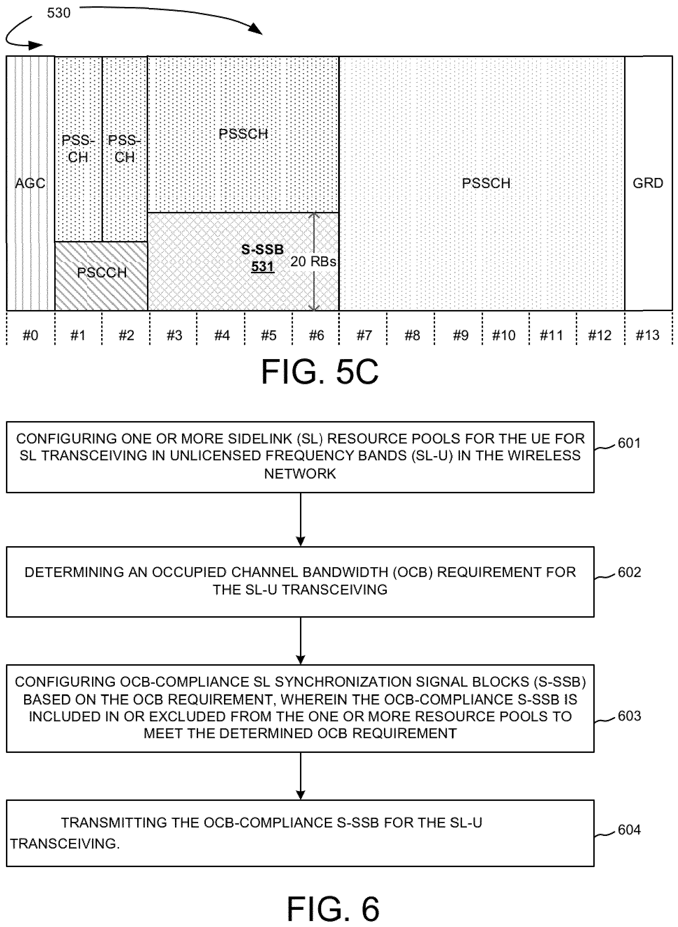

Figure 5C illustrates an exemplary diagram for OCB-compliance S-SSB to be included in the SL resource pool and multiplexed in the slot with contiguous RB-based transmission for PSCCH and PSSCH in accordance with embodiments of the current invention. The UE determines that the OCB requirement applies. In one embodiment, the S-SSB is FDM'ed with other SL-U transmission. The SL-U transmission block 530 is configured with contiguous RB-based transmission. In one embodiment, the S-SSB pattern 530 in legacy NR-U is reused, which means the S-SSB occupies a block comprised of four symbols in time domain and twenty RBs in frequency domain. Besides, the S-SSB should avoid occupying some resources occupied by some other signals. In this example, it means that the S-SSB should avoid occupying the symbol #0 to symbol #2 (used for AGC, PSCCH), symbol #13 (used for guard symbol), and the DMRS symbols of PSSCH signal within symbol #7 to symbol #12. Considering the above assumptions, one S-SSB pattern for SL-U can designed to occupy symbol #3 to symbol #6 in time domain and 20 RBs in frequency domain that start from a (pre-)configured RB (e.g., the first RB in this example) of the occupied transmission bandwidth. Moreover, another S-SSB pattern for SL-U in time domain can be designed to occupy symbol #4 to symbol 7, symbol #5 to symbol #8, symbol #6 to symbol #9, symbol #7 to symbol 10, symbol #8 to symbol 11, and/or symbol #9 to symbol #12.

In another embodiment, for the case that the slots for synchronization signals are included in the resource pool, the synchronization signals are multiplexed with other SL-U transmissions in the mode of TDM. In this case, the S-SSB can be (pre-)configured to occupy four symbols as legacy NR-U SSB pattern, and/or one slot (e.g.,13 symbols) as legacy SL S-SSB pattern. In frequency domain, if OCB requirement is mandatory, the repetition transmission in frequency domain and/or interlace transmission and/or a new sequence of S-SSB (e.g., S-PSS and/or S-SSS and/or PSBCH) with wider bandwidth can be (pre-)configured.

Figure 6 illustrates an exemplary flow chart for the sidelink synchronization signal pattern design to meet the OCB requirements in accordance with embodiments of the current invention. At step 601, the UE configures one or more sidelink (SL) resource pools for SL transceiving in unlicensed frequency bands (SL-U) in the wireless network. At step 602, the UE determines an occupied channel bandwidth (OCB) requirement for the SL-U transceiving. At step 603, the UE configures OCB-compliance SL synchronization signal blocks (S-SSB) based on the OCB requirement, wherein the OCB-compliance S-SSB is included in or excluded from the one or more resource pools to meet the determined OCB requirement. At step 604, the UE transmits the OCB-compliance S-SSB for the SL-U transceiving.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method for a user equipment (111), UE, in a wireless network (100), comprising:
configuring (601) one or more sidelink, SL, resource pools for SL transceiving in unlicensed frequency bands, SL-U, in the wireless network (100);
determining (602) an occupied channel bandwidth, OCB, requirement for the SL-U transceiving;
configuring (603) OCB-compliance SL synchronization signal blocks, S-SSB, based on the OCB requirement, wherein the OCB-compliance S-SSB is included in or excluded from the one or more resource pools to meet the determined OCB requirement; and
transmitting (604) the OCB-compliance S-SSB for the SL-U transceiving.

2. The method of claim 1, wherein the SL synchronization signal blocks are excluded from all of the one or more SL resource pools.

3. The method of claim 2, wherein the SL synchronization signal blocks are transmitted repeatedly in a frequency domain multiple N times based on the OCB requirements, and wherein a value of N is preconfigured or configured.

4. The method of claim 3, wherein frequency gaps are preconfigured or configured between each repeatedly transmitted SL synchronization signal blocks.

5. The method of claim 4, wherein the frequency gaps and a number of frequency domain repeated transmissions are configured within preconfigured corresponding range, and wherein a range for the frequency gaps and a range for the number of frequency domain repeated transmission are based on the OCB requirement, a power spectral density, PSD, requirement, subcarrier spacing, SCS, and S-SSB transmission power requirement.

6. The method of claim 2, wherein SL synchronization signal blocks are transmitted interlaced in a frequency domain.

7. The method of claim 1, wherein the SL synchronization signal blocks are included in the one or more SL resource pools.

8. The method of claim 7, wherein the SL synchronization signal blocks are multiplexed with other SL-U transmissions within a same time slot in the mode of frequency domain multiplexing, FDM.

9. The method of claim 8, wherein the SL synchronization signal blocks are configured with a length shorter than one slot in time domain.

10. The method of claim 8, wherein the location of SL synchronization signal blocks avoids one or more preconfigured resources allocated for one or more predefined usages.

11. The method of claim 7, wherein the SL synchronization signal blocks are multiplexed with other SL-U transmissions across different slots in the mode of time domain multiplexing, TDM.

12. The method of claim 7, wherein a new field is preconfigured in a physical sidelink control channel, PSCCH, to indicate whether the SL synchronization signal blocks are multiplexed in the slot.

13. The method of claim 1, wherein the transmission power of the SL synchronization signal block on one resource block, RB, set within an occupied bandwidth part, BWP, is preconfigured as a constant value.

14. The method of claim 1, wherein the transmission power of the SL synchronization signal block on each RB set within an occupied bandwidth part, BWP, is preconfigured as a constant value.

15. A user equipment (111), UE, comprising:
a transceiver (123) that transmits and receives radio frequency, RF, signal in a wireless network (100);
a resource pool module (191) that configures one or more sidelink, SL, resource pools for the UE (111) for SL transceiving in unlicensed frequency bands, SL-U, in the wireless network (100);
an occupied channel bandwidth, OCB, module (192) that determines an occupied channel bandwidth, OCB, requirement for the SL-U transceiving;
a configuration module (193) that configures OCB-compliance SL synchronization signal blocks, S-SSB, based on the OCB requirement, wherein the OCB-compliance S-SSB is included in or excluded from the one or more resource pools to meet the determined OCB requirement; and
an OCB control module (194) that transmits the OCB-compliance S-SSB for the SL-U transceiving.
